# EUROPEAN PATENT APPLICATION

(11) **EP 0 771 769 A2**
(43) Date of publication of application: **07.05.1997**
(21) Application number: 96307970.2
(22) Date of filing: 04.11.1996
(51) Int. Cl.: C04B 35/569

(54) **Sintering alpha silicon carbide powder with multiple sintering aids**

(30) Priority: 06.11.1995 US 554635
(71) Applicant: DOW CORNING CORPORATION, Midland Michigan 48686-0994 (US)
(72) Inventor: Easler, Timothy Edward, Midland, Michigan 48640 (US); Mahone, Louis Gates, Midland, Michigan 48640 (US); McCoy, Larry Garen, Midland, Michigan 48642 (US)
(74) Representative: Dowden, Marina

(57) **Abstract**

This invention relates to the preparation of highly densified ceramic bodies by the pyrolysis of a mixture comprising a carbon source, alpha silicon carbide powder, a source of boron and a source of aluminum. Such highly densified ceramic bodies are prepared by sintering under pressure or by a pressureless sintering process.

## Description

This invention prepares highly densified ceramic bodies by the pyrolysis of a mixture comprising a carbon source, alpha silicon carbide powder and multiple sintering aids comprising a source of boron and a source of aluminum. These highly densified ceramic bodies are prepared by sintering under pressure or by utilizing a pressureless process.

Silicon carbide ceramics are known in the art to have very desirable chemical and physical stability properties at high temperatures. As such, they have found utility in numerous structural applications, such as components for aircraft engines and motor vehicles and in corrosive environments such as the chemical industry.

Traditionally, silicon carbide ceramics are made by hot-pressing silicon carbide powder. Although effective, this technique is very expensive due to the high temperature and pressure required. Additionally, it is difficult to create complex shaped bodies by this process.

To avoid these disadvantages, various pressureless sintering methods have been developed. This prior art is generally represented by U.S. Patents 4,004,934; 4,041,117; 4,081,284; 4,312,954; 4,179,299 and 5,422,321.

The art, as exemplified above, teaches that sintering alpha silicon carbide powder to high density generally requires a different process than that used to also sinter beta silicon carbide to high density. As such, correlations in processing conditions are often difficult to draw from these references.

The present application discloses for the first time that high density, high strength alpha silicon carbide ceramic products are obtained by sintering a mixture comprising a source of carbon, alpha silicon carbide powder, a source of boron and a source of aluminum.

The present invention provides an unexpected method for preparing a sintered body of silicon carbide. The method comprises blending components comprising alpha silicon carbide powder, a carbon source, a source of boron and a source of aluminum to a uniform mixture. The amount of carbon present in the mixture is at least 0.1 weight percent, based on the weight of the silicon carbide powder. The amount of boron present in the mixture is between 0.1 and 3 weight percent, based on the weight of the silicon carbide powder. The amount of aluminum present in the mixture is also between 0.1 and 3 weight percent, based on the weight of the silicon carbide powder. This uniform mixture is then formed into a desired shape under pressure to obtain a green body. The green body is then sintered in an inert atmosphere at a temperature greater than 1900°C. to obtain a sintered body which has a density greater than 2.9 g/cm³.

The present invention teaches the preparation of highly densified monolithic sintered bodies from a composition comprising a carbon source, alpha silicon carbide powder, a source of boron and a source of aluminum. The sintered bodies produced by our invention have densities greater than 2.9 g/cm³ which corresponds to 90% of the theoretical density of silicon carbide (3.21 g/cm³). Such bodies are also economical in that alpha silicon carbide powder is less expensive than beta silicon carbide powder, which is often used in conventional processes. These highly densified, economical bodies are useful as light weight refractory ceramics.

The process of this invention is advantageous in that the use of boron and aluminum has a synergistic effect in increasing the density of the alpha silicon carbide body.

The ceramic bodies of this invention are formed from a uniform mixture comprising a carbon source, alpha silicon carbide powder, a source of boron and a source of aluminum. The carbon sources useful herein are well known in the art and any which provide sufficient free carbon on pyrolysis can be used. Naturally, those which give higher yields of carbon are preferred.

Examples of suitable carbon sources include elemental carbon, phenolic resin, coal tar, high molecular weight aromatic compounds such as Novolak™, phenol-formaldehyde, resorcinolformaldehyde, analine-formaldehyde, cresolformaldehyde, derivatives of polynuclear aromatic hydrocarbons contained in coal tar (such as dibenzanthracene or chrysene) and polymers of aromatic hydrocarbons, such as polyphenylene or polymethphenylene.

When the above materials are pyrolyzed, they decompose into a solid carbonaceous product, and depending on the material used, a variety of volatile organic species. This solid carbonaceous product is the free carbon used in the process of our present invention for sintering.

The carbon source is added to the mixture in an amounts such that the amount of free carbon is greater than 0.1 weight percent, based on the weight of the silicon carbide powder. For amounts of free carbon less than 0.1 weight percent, the density of the sintered body will normally fall below 2.9 g/cm³. It is generally preferred that the amount of free carbon in the mixture is greater than 0.5 wt%, and more preferred that the amount of free carbon be between 0.5 and 3 wt%. The optimum density is obtained when the amount of free carbon in the mixture is 1.0 - 3.0 weight percent.

Boron is necessary in our invention to facilitate sintering. Generally, the amount of boron added to the mixture is equivalent to 0.1 to 3.0 weight percent, based on the weight of the silicon carbide powder. Quantities less than this will inhibit proper sintering and larger quantities produce products which do not have the desired density. Preferably, the amount of boron added to the mixture is 0.1 to 1.0 weight percent, based on the weight of the silicon carbide powder.

The boron is added in the form of either elemental boron or boron-containing organic and inorganic compounds such as boron carbide, lithium borohydride, trivinylboron, triphenylboron, silicon hexaboride, H₃BO₃ and B₂O₃.

Aluminum is also necessary in this invention to facilitate sintering. The amount of aluminum added to the mixture is also equivalent to 0.1 to 3.0 weight percent, based on the weight of the silicon carbide powder. Quantities less than this will inhibit proper sintering and larger amounts often achieve products which do not have the desired density. Preferably, the amount of aluminum is equivalent to 0.1 to 1.0 weight percent, based on the weight of the silicon carbide powder.

The aluminum is added in the form of elemental aluminum or aluminum-containing organic and inorganic sintering aids such as aluminum oxide, aluminum nitride, aluminum diboride and aluminum isopropoxide.

The compositions of our invention must also include alpha silicon carbide powders. Such powders comprise all of the polytypes of silicon carbide other than 3C (cubic or beta) including, but not limited to, 4H, 6H and 15R. Many of these materials are commercially available and are well known in the art. Generally, SiC powders with a weight average particle size of less than ten micrometers are preferred. Powders with an average particle size of less than five micrometers are more preferred and those with a particle size of less than 1 micrometer are even more preferred. These powders may contain small amounts of free carbon, beta silicon carbide and/or other impurities. The free carbon, if present, is not used in calculating the free carbon necessary for sintering.

The addition of other processing aids such as lubricants, deflocculants and dispersants is also possible in this invention. Examples of such compounds include stearic acid, mineral oil, paraffin, calcium stearate, aluminum stearate, succinic acid, succinimide, succinic anhydride or various commercial products such as OLOA 1200™. Also possible is the use of temporary, fugitive binders such as acrylics, polyvinyl alcohol and polyethylene glycol. If used, these aids are present in amounts less than 25 wt%.

The desired amounts of the various components are combined in a manner which assures a uniform and intimate mixture so that areas of varying density throughout the sintered product are avoided. These mixtures are produced by using conventional blending techniques such as grinding the various powders in either the dry or wet state and ultrasonic dispersion. Preferred is wet grinding where the various powders are mixed and ground with organic solvents and the solvent is thereafter removed. Other useful mixing and grinding methods are apparent to those skilled in the art.

The uniform and intimate mixture is then formed into green bodies of a desired shape. The green bodies are formed by conventional techniques known in the art. Such methods include pressure molding, uniaxial pressing, isopressing, extrusion, transfer molding and injection molding.

If desired, our green body can be machined, milled or shaped at this stage. Methods for such shaping are known in the art.

Once the final shape is obtained, the green body is sintered in an inert atmosphere and/or under vacuum to a temperature of 1900°C. or more. The preferred sintering temperature is 1950 to 2200°C. with 2070°C. being most preferred. If temporary, fugitive binders are used, separate furnace cycles may be necessary to volatilize these materials.

The compositions of this invention are sintered either under pressure or by using a pressureless process. Since the sintering process employing pressure will produce ceramic articles with higher density, such a method is preferred if maximum density were desired. Typically, however, the pressureless sintering process is preferred because of the simplified operations involved.

Inert atmospheres are used during pyrolysis to prevent oxygen incorporation into our ceramic. The sintering process, as well as the density of the sintered product, are thereby enhanced. For purposes of this invention, an inert atmosphere is meant to include an inert gas, vacuum or both. If an inert gas is used, it is selected from argon, helium or nitrogen. If a vacuum is used, it is in the range of 13.3 Pa to 26.6 kPa (0.1-200 torr), preferably 13.3 to 40.0 kPa (0.1-0.3 torr). Exemplary of a combined process might be firing the composition in argon up to 1150°C., firing from 1150 to 1575°C. in a vacuum and firing from 1575 to 2070°C. under argon.

Sintering is performed in any conventional high temperature furnace equipped with a means to control the furnace atmosphere (e.g., graphite furnaces). Such furnaces are well known in the art and are commercially available.

The temperature schedule for sintering depends on both the volume of parts to be fired and the composition of the mixture. For smaller objects, the temperature may be elevated relatively rapidly. For larger objects, however, more extended programs are needed to create uniform ceramic bodies.

Although not wishing to be limited by theory, it is thought that the free carbon plays two different roles in the formation of highly densified sintered bodies. First, it helps remove oxygen present in the silicon carbide powder; and secondly, it apparently acts as an additional sintering aid.

Also, the combination of boron and aluminum as sintering aids is thought to result in the formation of a transient liquid phase which initiates densification at lower sintering temperatures.

By the above methods, ceramic articles having densities greater than 90% of theoretical are formed. It is preferred that the density of the ceramic article be greater than 3.05 g/cm³ (95% of theoretical).

The microstructure of materials (as determined by conventional ceramographic techniques of ASTM E-112) produced by our process differs from those produced with conventional single constituent sintering aids. For example, when samples prepared using 0.75 wt% of B₄C as a single sintering aid are compared to samples containing both 0.25 wt% of Al and 0.25 wt% of B₄C, the average grain size of the former was 3.5 micrometers and 4.0 micrometers for the latter. In addition, the latter material exhibited a higher concentration of grains larger than 20 micrometers (approximately 7% vs 16% by area). The largest grains are on the order of 45 micrometers for the latter compared to 35 micrometers for the former.

As such, it is evident that our multiple sintering aids provide increased densification accompanied with increased grain growth when compared to single sintering aids.

So those skilled in the art can better appreciate and understand the invention, the following examples are given. Unless otherwise indicated, all percentages are by weight.

In the following examples, the analytical methods used were as follows:

Test bars were formed on a laboratory press. Pyrolysis was carried out in an Vacuum Industries" graphite element furnace equipped with an automatic controller. The furnace was equipped with an Ircon™ optical pyrometer to monitor the temperature above 900°C. Fired densities were measured by water immersion techniques according to ASTM C373-72.

The SiC powder used was Starck" UF-15 silicon carbide. The boron source used was Wacker™ ESK 1500 boron carbide powder (< 5 micrometers). The aluminum powder was Cerac™ A1183 (1 micrometer), the aluminum carbide powder was Cerac™ A1010 of less than 44 micrometers (325 mesh) and the aluminum nitride powder was Cerac™ 1119 of less than 74 micrometers (200 mesh).

### Example I

Five mixtures of alpha SiC powder, the carbon source, curing agent, dispersant, aluminum and boron were made. The mixtures contained 1100 g of HC Starck UF-15 alpha SiC powder (Surface area = 16m²/g; dₘₑₐₙ = 0.6 micrometer; Al = 160 ppm; oxygen = 1.4 %; free carbon = 0.2%), 4 parts per hundred (pph) of phenolic resin (74% solids), 2 parts per hundred of oleic acid, 0.3 part per hundred of Lubrizol™ 22994B dispersant, 171 parts per hundred of toluene, 20 parts per hundred of ethanol and the following concentrations of boron and aluminum: Mix 1 (1.0 pph boron carbide, 0.0 pph aluminum), Mix 2 (0.0 pph boron carbide, 0.0 pph aluminum), Mix 3 (1.0 pph boron carbide, 1.0 pph aluminum), Mix 4 (0.0 pph boron carbide, 1.0 pph aluminum) and Mix 5 (0.5 pph boron carbide, 0.5 pph aluminum). The mixture had 1.7 wt% free carbon.

The mixtures were spray dried at 90°C. in a Niro™ Atomizer Mobile Minor Spray Dryer to produce flowable granules (50-90 micrometers). Residual solvent was removed from the granules by post-drying at 80°C. in vacuum.

The resultant granules were then blended, as needed, to form the compositions of Table 1.

The granules were die pressed into a 1.28 cm X 5.3 cm die at room temperature at a pressure of 1288 kg/cm² to form 7 g test bars having an average thickness of 0.6 cm. The test bars were removed from the die, weighed and dimensionally measured. The test bars were fired to 2070°C. using a temperature program of room temperature to 300°C. at 3°C./min under argon, 0.5 hour hold at 300°C. under argon, 300 to 1150°C. at 5°C./min under argon, 1150 to 1500°C. at 2.5°C./min under vacuum, 1500°C. hold for 4 hours under vacuum, 1500 to 2070°C. at 2.5°C./min under argon, and 2070°C. hold for 1 hour under argon. The furnace was cooled from 2070°C. to 1150°C. at 8°C./min under argon and 1150°C. to 95°C. at 5°C./minute under vacuum.

The test bars were run in triplicate and the sintered density was measured by the Archimedes method. The average of the 3 test bars was calculated and reported in Table 1.

**Table 1 -**

| Density (g/cm³) of Fired Test Bars | | | | | |
|---|---|---|---|---|---|
| B₄C Content | Aluminum Content | | | | |
| | 0.00 | 0.25 | 0.50 | 0.75 | 1.00 |
| 1.0 | 3.117 | | 3.162 | | 3.169 |
| 0.75 | 2.972 | 3.169 | | 3.147 | |
| 0.5 | 2.944 | | 3.167 | | 3.081 |
| 0.25 | | 3.044 | | 3.142 | |
| 0.0 | 1.64 | | 1.73 | | 1.82 |
| boron carbide and aluminum reported in parts per hundred (pph) based on the weight of SiC powder. | | | | | |

### Example 2

In this Example, larger test bars were made to determine the effect of dual sintering aids on thicker cross-sections (it is known that thicker cross-sections are more difficult to densify).

The same granules as Example 1 were die pressed into 1.28 cm X 5.3 cm die at room temperature at a pressure of 1288 kg/cm² to form 17 g test bars with an average thickness of 1.45 cm. The test bars were removed from the die, weighed and dimensionally measured. The test bars were fired in the same manner as Example 1.

The average density results are reported in Table 2.

**Table 2 -**

| Density (g/cm³) of Fired Test Bars | | | | | |
|---|---|---|---|---|---|
| B₄C Content | Aluminum Content | | | | |
| | 0.00 | 0.25 | 0.50 | 0.75 | 1.00 |
| 1.0 | | | | | |
| 0.75 | | 3.160 | | 3.134 | |
| 0.5 | 2.839 | | 3.155 | | |
| 0.25 | | 3.074 | | 3.111 | |
| 0.0 | | | | | |
| boron carbide and aluminum reported in parts per hundred (pph) based on the weight of SiC powder. | | | | | |

The data in these tables clearly demonstrate that the use of both boron and aluminum as sintering aids provides a synergistic effect in increasing density over the use of each of these materials individually. Although the increase in density appears to be rather small, such numbers are extremely significant when dealing with the high densities reported.

## Claims

1. A uniform mixture comprising alpha silicon carbide powder, a carbon source, a source of boron and a source of aluminum, wherein the amount of carbon source is such that on pyrolysis it produces at least 0.1 weight percent free carbon based on the weight of silicon carbide powder, the amount of the source of boron is sufficient to provide between 0.1 and 3 wt% boron based on the weight of the silicon carbide powder and the amount of the source of aluminum is sufficient to provide between 0.1 and 3 wt% aluminum based on the weight of the silicon carbide powder.

2. A method of preparing a sintered body of alpha silicon carbide comprising:
(a) preparing the uniform mixture of claim 1;
(b) forming said uniform mixture into a desired shape under pressure to obtain a green body; and
(c) sintering the green body in an inert atmosphere at a temperature greater than 1900°C. to obtain a sintered body of alpha silicon carbide with a density greater than 2.9 g/cm³.

3. The method of claim 2 wherein the source of boron is selected from elemental boron or boron-containing compounds and the amount of boron is sufficient to provide in the range of between 0.1 and 1 weight percent of boron, based on the weight of the silicon carbide powder.

4. The method of claim 2 wherein the source of aluminum is selected from elemental aluminum or aluminum-containing compounds and the amount of aluminum is sufficient to provide in the range of between 0.1 and 1 weight percent of aluminum, based on the weight of the silicon carbide powder.

5. The method of any of claims 2 to 4 wherein the green body is sintered at a temperature in the range of 2000 to 2200°C.
